# EUROPEAN PATENT APPLICATION

(11) **EP 1 085 309 A2**
(43) Date of publication of application: **21.03.2001**
(21) Application number: 00307469.7
(22) Date of filing: 31.08.2000
(51) Int. Cl.: G01L 9/00

(54) **Vibrating quartz diaphragm pressure sensor**

(30) Priority: 02.09.1999 US 389654
(71) Applicant: Halliburton Energy Services, Inc., Dallas, Texas 75381-9052 (US)
(72) Inventor: Dennis, John R., Bozeman, Montana 79715 (US)
(74) Representative: Wain, Christopher Paul

(57) **Abstract**

A sensor (26) is manufactured by etching bores (14) into opposite ends (16) of a cylindrical piezoelectric crystal (12), thereby forming an active resonator element (20) between the bores (16) without grinding the crystal (12).

## Description

The present invention relates generally to sensor construction, and, more specifically, relates to a quartz pressure sensor and methods of manufacturing same.

In downhole applications, due to a limited wellbore diameter and the need to provide as large a flow area therethrough as possible, space is at a premium. Therefore, where it is desired to measure and/or record properties such as pressure, temperature, etc. in a wellbore, it is a significant benefit to provide relatively small sensors for use in these applications. Of course, other applications for miniaturized sensors exist, as well.

Additionally, where sensors are reduced in size, imperfections due to sensor fabrication techniques tend to correspondingly reduce the accuracy of the sensors. For example, a minute imperfection in a relatively large sensor may have only a minor effect on the accuracy of the large sensor, but when the same imperfection exists in a miniaturized sensor, its effect on the sensor's accuracy may be substantial. Therefore, it would be very desirable to provide manufacturing methods which reduce the number and size of imperfections in sensors.

Furthermore, it would be beneficial to enhance the sensitivity of sensors, without detracting from the sensors' short or long term stability or thermal response. Thus, a need exists for enhanced sensitivity sensors.

In carrying out the principles of the present invention, in accordance with embodiments thereof, sensors and manufacturing methods therefor are provided. The sensors may have structural characteristics which enhance accuracy and/or increase sensitivity, and the manufacturing methods may enable convenient miniaturization of sensors and reduction of imperfections therein.

In one aspect of the present invention, a sensor may be fabricated by forming a bore into each end of a crystal, thereby creating an active resonator element between the bores. The bores may be formed by high aspect ratio chemical or plasma etching, and may be single point diamond rough machined or ultrasonically milled prior to the etching step. Additionally, ion milling of the bores may be performed after the etching step. These techniques may reduce the occurrence of imperfections in the resonator element which are due to typical hand grinding techniques.

In another aspect of the present invention, a resonator element of a sensor may have openings formed therethrough, so that the resonator element remains attached to a peripheral portion of the sensor by two attachments. These attachments may be aligned with a particular axis of an anisotropic sensor crystal, thereby increasing the sensitivity of the sensor.

In still another aspect of the present invention, the sensor may have an elliptical cross-section. A minor axis of the elliptical cross-section may be aligned with a particular crystal axis. This configuration may enhance the sensitivity of the sensor.

According to another aspect of the invention there is provided a method of producing a sensor, the method comprising the steps of: providing a single AT cut quartz crystal having opposite ends; masking an outer peripheral portion of each crystal end; and etching a bore into each crystal end, thereby forming an active resonator element between the bores without grinding the crystal.

The crystal preferably is cylindrical or has an elliptical cross-section. A minor axis of the elliptical cross-section may be aligned with an x-axis of the crystal.

In an embodiment, the method further comprises the step of forming an opening through the resonator element on each side of an x-axis of the crystal. The opening forming step may further comprise forming the openings so that the resonator element remains attached to the peripheral portion of the crystal by attachments aligned with the x-axis.

In an embodiment, the etching step further comprises a selected step of high aspect ratio chemical etching and plasma etching the crystal to form the bores.

In an embodiment, the method further comprises the step of ion milling the crystal after the etching step.

In an embodiment, in the etching step, the resonator element is formed with flat sides facing the bores.

In an embodiment, in the etching step, the resonator element is formed with convex sides facing the bores.

In an embodiment, the method further comprises the step of rough cutting the bores in the ends of the crystal by a selected one of single point diamond machining and ultrasonic milling.

According to another aspect of the invention there is provided a pressure sensor, comprising: a single piece of AT cut quartz crystal having opposite ends and a bore extending into each end, thereby defining an active resonator element between the bores, a pair of openings being formed through the resonator element, so that the resonator element remains attached to a peripheral portion of the crystal by two attachments aligned with an x-axis of the crystal.

In an embodiment, each of the attachments extends approximately thirty degrees to either side of the x-axis.

The crystal is preferably cylindrical or has an elliptical cross-section.

Opposite sides of the resonator element facing the bores are preferably flat or convex.

According to another aspect of the invention there is provided a pressure sensor assembly, comprising: a sensor formed from a single piece of AT cut quartz crystal, the sensor having two openings formed therethrough defining an active resonator element and two attachments securing the resonator element to a peripheral portion of the sensor, the attachments being aligned with an x-axis of the sensor; and at least one closure isolating the resonator element from fluid surrounding the sensor assembly.

Opposite sides of the resonator element are preferably flat or convex.

Reference is now made to the accompanying drawings, in which:
FIG. 1 is a perspective side view of a piezoelectric crystal utilized in an embodiment of a method according to the present invention;
FIG. 2 is a cross-sectional view of the crystal of FIG. 1 after certain steps of the method have been performed to form a sensor;
FIG. 3 is an end view of the sensor of FIG. 2, showing an alternative construction of the sensor;
FIG. 4 is a cross-sectional view of another alternative construction of the sensor; and
FIG. 5 is an end view of a further alternative construction of the sensor.

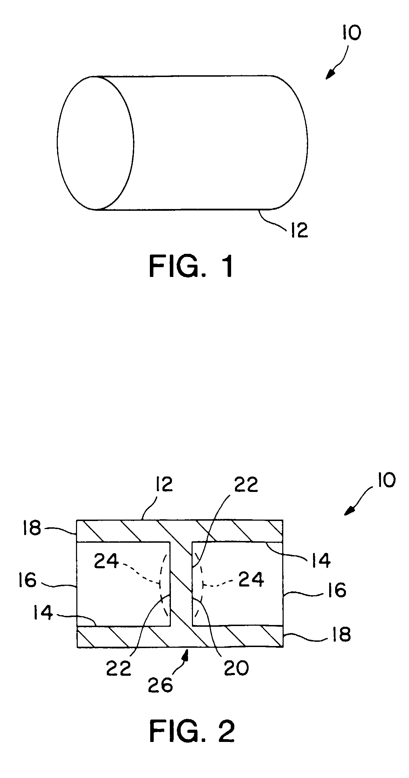

Representatively illustrated in FIG. 1 is a method of manufacturing a sensor 10 which embodies principles of the present invention. In the following description of the method 10 and other apparatus and methods described herein, directional terms, such as "above", "below", "upper", "lower", etc., are used for convenience in referring to the accompanying drawings. Additionally, it is to be understood that the various embodiments of the present invention described herein may be utilized in various orientations, such as inclined, inverted, horizontal, vertical, etc., without departing from the principles of the present invention.

The method begins with a single piezoelectric crystal 12. The crystal 12 may be cylindrical in shape as shown in FIG. 1, or other shapes may be utilized, if desired. In the following description of the method 10, it will be described as used to produce a pressure sensor, but it is to be clearly understood that principles of the present invention may be incorporated into methods of manufacturing other types of sensors. For manufacturing a pressure sensor, the crystal 12 is preferably an AT cut quartz crystal, of the type well known to those skilled in the art.

Referring additionally now to FIG. 2, the method 10 is shown after steps have been performed to form bores 14 into opposite ends 16 of the crystal 12. The bores 14 are preferably formed by masking outer peripheral portions 18 of the respective ends 16 and then high aspect ratio etching the bores into the crystal 12. Note that FIG. 2 depicts the bores 14 as being symmetrical and identically formed into the crystal 12, but this is not necessary in keeping with the principles of the present invention.

Prior to etching the bores 14 into the crystal 12, the bores may be rough machined, for example, by single point diamond machining or ultrasonic milling. Additionally, even though the high aspect ratio etching significantly reduces the possibility of imperfections being formed in the bores 14 as compared to conventional grinding techniques, the etching step may be followed by ion milling to even further reduce the possibility of imperfections.

By forming the bores 14 into the crystal 12, an active resonator element 20 is defined between the bores. The resonator element 20 may have electrodes (not shown) attached thereto using conventional techniques in order to induce vibration of the element. With the resonator element 20 so formed between the bores 14 and electrodes attached thereto as desired, a sensor 26 is thereby produced by the method 10 from the crystal 12. The resonator element 20 may be isolated from fluids surrounding the sensor 26 by attaching closures or end caps to the ends 16, using techniques well known to those skilled in the art, thereby constructing a sensor assembly.

The resonator element 20 may have flat opposing sides 22 facing the respective bores 14 as depicted by the solid lines in FIG. 2. Alternatively, the resonator element 20 may have convex opposing sides 24 as depicted by the dashed lines in FIG. 2.

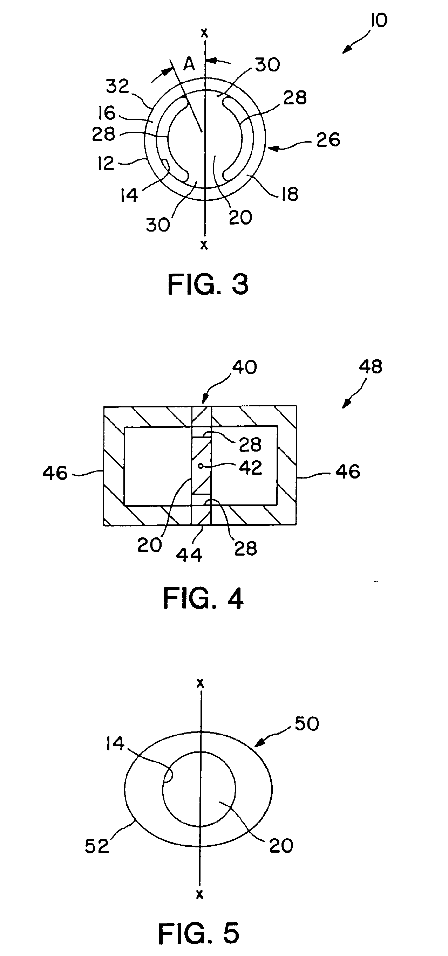

Referring additionally now to FIG. 3, additional optional steps in the method 10 are representatively illustrated. The sensor 26 is shown in FIG. 3 from an end view in which it may be seen that openings 28 are formed through the resonator element 20 on opposing sides of an axis of the crystal 12. For an AT cut quartz crystal, the openings 28 are formed on opposing sides of the x-axis of the resonator element 20. In the preferred AT cut quartz embodiment, this technique enhances the sensitivity of the resonator element 20 to changes in stress applied uniformly around the crystal 12.

Preferably, the openings 28 are generally arc-shaped as depicted in FIG. 3 and extend up to an angle A from the x-axis on either side thereof. Preferably, the angle A is approximately 30 degrees, although other angles may be utilized without departing from the principles of the present invention.

The openings 28 define attachments 30 by which the resonator element 20 is attached to an outer peripheral portion 32 of the crystal 12. These attachments 30 are aligned with the x-axis of the crystal 12.

Referring additionally now to FIG. 4, an alternative construction of a sensor 40 embodying principles of the present invention is representatively illustrated. Elements shown in FIG. 4 which are similar to those previously described are indicated using the same reference numbers. Note that the sensor 40 includes a resonator element 20 having openings 28 formed therethrough. The x-axis of the AT cut quartz crystal of which the sensor 40 is formed extends perpendicular to the plane of the drawing page and so is represented in FIG. 4 as a dot 42. Thus, the resonator element 20 is attached to a peripheral portion 44 of the sensor 40 with attachments (not visible in FIG. 4) aligned with the x-axis, similar to the sensor 26.

However, the sensor 40 is constructed as a generally disc-shaped piece, which then has end caps or closures 46 attached to either side thereof to form a sensor assembly 48. The end caps 46 isolate the resonator element 20 from fluid surrounding the sensor assembly 48 and may be attached, for example, using glass.

Referring additionally now to FIG. 5, an alternative construction of a sensor 50 embodying principles of the present invention is representatively illustrated. Elements shown in FIG. 5 which are similar to those previously described are indicated using the same reference numbers.

The sensor 50 is similar to the sensor 26 as shown in FIG. 2. As with the sensor 26, the sensor 50 is made from a single piezoelectric crystal 52 in which the bores 14 have been formed from opposite ends of the crystal, thereby defining the resonator element 20 therebetween. However, the sensor 50 differs in at least one significant respect in that the crystal 52 has an elliptical cross-section. The sensor 50 is shown in FIG. 5 from an end view thereof, in which it will be readily appreciated that the crystal 52 has an elliptical cross-section.

Additionally, in the preferred embodiment the AT cut quartz crystal 52 is provided so that the x-axis thereof is aligned with a minor axis of the crystal's elliptical cross-section. In FIG. 5, it may clearly seen that the minor axis of the crystal's elliptical cross-section coincides with the x-axis of the crystal. Such alignment of the x-axis with the elliptical cross-section minor axis makes the resonator element 20 more sensitive to stress applied uniformly around the sensor 50, thereby enhancing the sensitivity of the sensor.

Of course, a person skilled in the art would, upon a careful consideration of the above description of representative embodiments of the invention, readily appreciate that many modifications, additions, substitutions, deletions, and other changes may be made to these specific embodiments, and such changes are contemplated by the principles of the present invention. Accordingly, the foregoing detailed description is to be clearly understood as being given by way of illustration and example only.

## Claims

1. A method of producing a sensor (26,40,50), comprising the steps of: masking an outer peripheral portion of opposite crystal ends (16) of a single AT cut quartz crystal (12); and etching a bore (14) into each crystal end (14), thereby forming an active resonator element (20) between the bores (14) without grinding the crystal (12).

2. A method according to Claim 1, wherein the crystal (12) is cylindrical.

3. A method according to Claim 1, wherein the crystal (12) has an elliptical cross-section.

4. A method according to Claim 3, wherein a minor axis of the elliptical cross-section is aligned with an x-axis of the crystal (12).

5. A pressure sensor (26,40,50), comprising: a single piece of AT cut quartz crystal (12) having opposite ends (16) and a bore (14) extending into each end (16), thereby defining an active resonator element (20) between the bores (14), a pair of openings (28) being formed through the resonator element (20), so that the resonator element (20) remains attached to a peripheral (32,44) portion of the crystal (12) by two attachments (30) aligned with an x-axis of the crystal.

6. A sensor (26,40,50) according to Claim 5, wherein each of the attachments extends approximately thirty degrees to either side of the x-axis.

7. A sensor (26,40) according to Claim 5 or 6, wherein the crystal is cylindrical.

8. A pressure sensor assembly, comprising: a sensor (40) formed from a single piece of AT cut quartz crystal (12), the sensor (40) having two openings (28) formed therethrough defining an active resonator element (20) and two attachments (30) securing the resonator element (20) to a peripheral portion (44) of the sensor (40), the attachments (30) being aligned with an x-axis of the sensor (40); and at least one closure (46) isolating the resonator element (20) from fluid surrounding the sensor assembly.

9. A pressure sensor assembly according to Claim 8, wherein opposite sides of the resonator element (20) are flat.

10. A pressure sensor assembly according to Claim 8, wherein opposite sides of the resonator element (20) are convex.
